# NOUVEAU FASCICULE DE BREVET EUROPEEN

(11) **EP 0 380 416 B2**
(45) Date de publication et mention de la décision concernant l'opposition: **25.11.1998**
(45) Mention de la délivrance du brevet: 06.10.1993
(21) Numéro de dépôt: 90400210.2
(22) Date de dépôt: 24.01.1990
(51) Int. Cl.: A47J 27/21

(54) **Bouilloire électrique perfectionnée**
Elektrischer Wasserkessel
Electric water kettle

(30) Priorité: 27.01.1989 FR 8901016; 08.03.1989 FR 8903036
(43) Date de publication de la demande: 01.08.1990
(73) Titulaire: SEB S.A., 69130 Ecully (FR)
(72) Inventeur: Bourgeois, Christian, F-39700 Dampierre (FR)
(74) Mandataire: Keib, Gérard

(56) Documents cités:
- EP-A- 0 254 482
- FR-A- 2 446 576
- GB-A- 1 264 464
- GB-A- 1 274 552
- GB-A- 1 316 436
- GB-A- 1 415 843
- GB-A- 1 426 427
- GB-A- 1 470 367
- GB-A- 2 042 269
- GB-A- 2 055 248
- GB-A- 2 113 010
- GB-A- 2 120 083
- GB-A- 2 150 759
- GB-A- 2 152 802
- GB-A- 2 170 956
- GB-A- 2 179 544
- GB-A- 2 185 150
- GB-A- 2 200 034
- GB-A- 2 222 025
- US-A- 4 645 910
- Extracts from Argos catalogues Spring/Summer 1988 (cover and page 157) and Autumn/Winter 1988 (cover and page 109) Argos Distributors Limited, 1988

## Description

La présente invention concerne une bouilloire électrique perfectionnée.

On connaît notamment selon le brevet français 2 592 293 de la demanderesse, une bouilloire électrique comprenant un récipient à eau fermé par un couvercle, ce récipient comportant une résistance chauffante électrique fixée au fond de ce récipient, ce fond reposant de façon amovible sur un socle comportant des moyens de connexion électrique coopérant avec des moyens de connexion complémentaires fixés au fond du récipient.

Le récipient à eau comprend d'autre part un limiteur de température sensible à la température de la vapeur et adapté pour couper l'alimentation électrique à une température prédéterminée de la vapeur et un interrupteur étant prévu pour commander l'alimentation électrique de la résistance lorsque le récipient est placé sur le socle.

Dans cette réalisation, le limiteur de température est placé à la partie supérieure de la bouilloire.

L'élément sensible à la température constitué par un bilame est donc directement exposé à la vapeur formée en haut du récipient, qui est à haute température (voisine de 100°C).

Ce limiteur de température coupe l'alimentation électrique de la résistance chauffante lorsque la température désirée (voisine de 100°C) est atteinte.

Un bouton de commande permet de réarmer le limiteur de température. A cet effet, il faut attendre que l'élément sensible à la température du limiteur soit suffisamment refroidi. Comme cet élément se trouve à haute température (sur le palier de vaporisation de l'eau), cet élément se refroidit très lentement, de sorte qu'il faut attendre trop longtemps pour réarmer le limiteur de température.

On a décrit d'autre part dans la demande de brevet européen 254 482, une bouilloire montée de façon amovible sur un socle, la partie supérieure du récipient comportant un bouton de commande de la mise en ou hors circuit de l'alimentation électrique de la résistance chauffante. Ce bouton de commande coopère avec une tringlerie située dans un espace latéral au récipient qui permet d'actionner un dispositif de commutation situé sous le fond du récipient.

Une telle tringlerie est complexe et affecte le coût de fabrication de la bouilloire.

On connaît également par les brevets GB-1 274 552 et GB-2 055 248 une bouilloire électrique sans socle possédant un dispositif limiteur de température situé dans le bas de l'appareil, la vapeur étant acheminée du haut vers le bas à l'aide d'un conduit qui est en contact interne avec l'eau chaude et la vapeur contenues dans le récipient.

Le but de la présente invention est de remédier aux inconvénients des réalisations connues.

L'invention vise ainsi une bouilloire électrique comprenant un récipient à eau fermé par un couvercle, ce récipient comportant une résistance chauffante électrique fixée au fond de ce récipient, ce fond reposant de façon amovible sur un socle comportant des moyens de connexion électrique coopérant avec des moyens de connexion complémentaires faisant partie d'un bloc de connexion fixé au fond du récipient, le récipient comprenant d'autre part un limiteur de température sensible à la température de la vapeur et adapté pour couper l'alimentation électrique à une température prédéterminée de la vapeur et un interrupteur étant prévu pour commander l'alimentation électrique de la résistance lorsque le récipient est placé sur un socle.

Suivant l'invention, le récipient comporte un concuit de passage de la vapeur s'étendant sensiblement sur toute la hauteur du récipient et faisant saillie à l'intérieur du récipient, le conduit débouche à sa partie inférieure en regard de l'élément sensible à la température du limiteur de température, la quasi-totalité de la surface extérieure du conduit est exposée à l'intérieur du récipient et le limiteur de température fait partie du bloc de connexion, ce limiteur s'étendant horizontalement à faible distance du fond du récipient, l'interrupteur pour commander l'alimentation électrique de la résistance comprenant un levier de commande s'étendant dans un espace situé sur le fond du récipient et faisant saillie à la partie inférieure de la paroi latérale du récipient.

On a constaté que grâce au conduit de vapeur qui permet d'amender la vapeur au contact de l'élément sensible du limiteur en un point situé à la partie inférieure de la bouilloire, cet élément se refroidit beaucoup plus vite que dans les réalisations connues, de sorte qu'il est possible de réarmer le limiteur de température très peu de temps après son déclenchement.

Par ailleurs le fait que l'interrupteur pour commander l'alimentation électrique de la résistance comprenne un levier de commande s'étendant dans un espace situé sous le fond du récipient et faisant saillie sur la paroi latérale du récipient permet d'éviter la tringlerie complexe de la réalisation connue précitée.

De préférence, le levier de commande coopère avec des moyens qui l'amènent automatiquement en position de mise hors circuits de l'alimentation électrique de la résistance, lorsque le récipient est soulevé du socle.

Cette disposition permet d'éviter tout risque d'arcs électriques entre les moyens de connexion du fond du récipient et du socle, lorsque ce récipient est séparé de ce socle.

D'autres formes d'exécution font l'objet des revendications dépendantes.

D'autres particularités et avantages de l'invention apparaîtront encore dans la description ci-après.

Aux dessins annexés donnés à titre d'exemples non limitatifs :
- la figure 1 est une vue en coupe longitudinale d'une bouilloire conforme à l'invention, celle-ci étant en position d'arrêt,
- la figure 2 est une vue en coupe de la partie inférieure de la bouilloire, celle-ci étant en position de marche,
- la figure 3 est une vue en coupe de la partie inférieure du récipient à eau de la bouilloire, séparé de son socle,
- la figure 4 est une vue en coupe suivant le plan IV-IV de la figure 1,
- la figure 5 est une vue en coupe de la partie inférieure de la bouilloire selon un mode de réalisation préféré,
- la figure 6 est une vue analogue à celle de la figure 3, la paroi amovible étant détachée du fond du récipient.

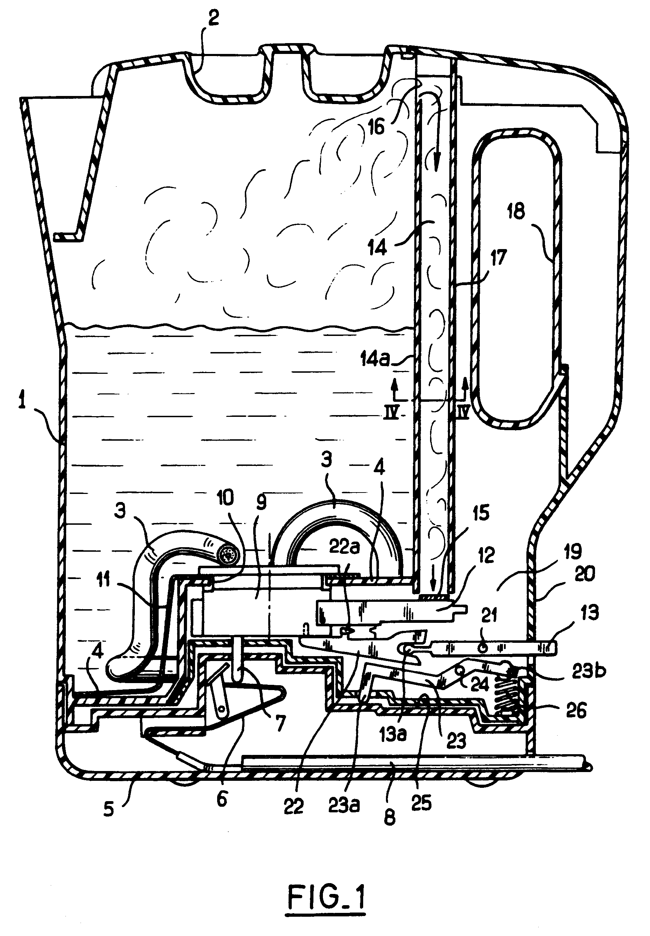

Dans la réalisation de la figure 1, la bouilloire électrique moulée en matière plastique comprend un récipient à eau 1 fermé par un couvercle 2, ce récipient comportant une résistance chauffante électrique 3 fixée au fond 4 de ce récipient. Ce fond 4 repose de façon amovible sur un socle 5 comportant des moyens de connexion électrique 6 coopèrant avec des moyens de connexion complémentaires 7 fixés au fond 4 du récipient 1. Les moyens de connexion 6 du socle comprennent des lames métalliques élastiques reliées à un cordon d'alimentation électrique 8 destiné à être raccordé au réseau. Les moyens de connexion 7 du récipient comprennent des broches métalliques reliées à la résistance 3 par l'intermédiaire d'un bloc de connexion 9 fixé de façon étanche dans une ouverture 10 ménagée dans le fond 4 du récipient 1. Ce fond 4 est en partie recouvert d'une tôle 11 de protection thermique.

Le récipient 1 comprend d'autre part un limiteur de température 12 sensible à la température de la vapeur et adapté pour couper l'alimentation électrique à une température prédéterminée de la vapeur. D'autre part, un interrupteur 13 est prévu pour commander l'alimentation électrique de la résistance 3 lorsque le récipient 1 est placé sur le socle 5.

Conformément à l'invention, le récipient 1 comporte un conduit 14 de passage de la vapeur s'étendant sensiblement sur toute la hauteur du récipient 1.

Ce conduit 14 débouche à sa partie inférieure en regard de l'élément bimétallique 15 sensible à la température du limiteur de température 12. Ce conduit 14 débouche à l'intérieur du récipient 1 par une ouverture 16 située tout près du couvercle 2.

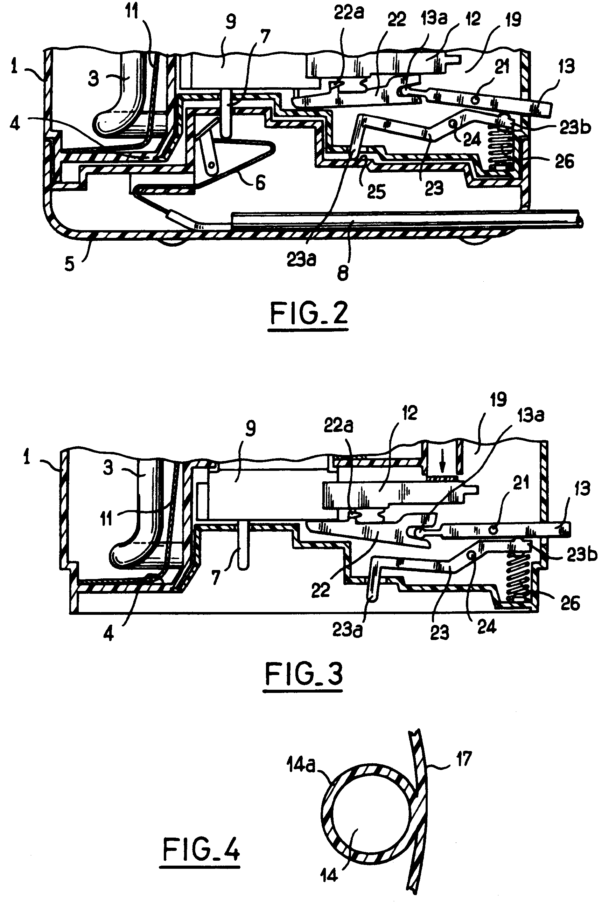

Par ailleurs, le conduit 14 fait saillie à l'intérieur du récipient 1 et la quasi-totalité de sa surface extérieure 14a est exposée à l'intérieure du récipient 1. Une fraction très réduite de cette surface extérieure est commune avec la paroi extérieure 17 du récipient 1 adjacente à sa poignée 18 (voir figure 4).

On voit également sur la figure 1 que l'élément 15 sensible à la température est situé horizontalement à une faible distance du fond 4 du récipient 1. La surface de cet élément 15 correspond sensiblement à la section du conduit 14.

Par ailleurs, cet élément 15 est entouré par un espace creux 19. On voit également sur la figure 1 que les broches de connexion 7 font partie d'un bloc de connexion 9 et que le limiteur de température 12 fait partie de ce bloc.

Par ailleurs, l'interrupteur 13 pour commander l'alimentation électrique de la résistance 3 comprend un levier de commande sensiblement horizontal s'étendant dans un espace 19 situé sous le fond 4 du récipient. Ce levier 13 fait saillie à la partie inférieure 20 de la paroi latérale du récipient 1, de façon à être accessible aux utilisateurs.

Ce lever de commande 13 est articulé sur un axe 21 situé à l'intérieur du récipient 1 et son extrémité 13a opposée à l'extérieur du récipient est articulée à un organe 22 pouvant pivoter autour d'un axe 22a entre une position (voir figure 1) où l'alimentation électrique de la résistance 3 est hors-circuit et une position (voir figure 2) dans laquelle celle-ci est en circuit. Cet organe pivotant 22 est stable dans les deux positions.

Les moyens de commutation commandés par l'organe 22, contenus dans le bloc 9, ne sont pas représentés, car ils sont connus en eux-mêmes. De même, ne sont pas représentés les moyens de coopération entre l'élément bimétallique 15 et l'organe 22. Ces moyens sont bien connus notamment dans les bouilloires.

Par ailleurs, le levier de commande 13 coopère avec des moyens qui l'amènent automatiquement en position de mise hors circuit de l'alimentation électrique de la résistance 3, lorsque le récipient 1 est enlevé du socle 5, comme indiqué sur la figure 3.

Les moyens précités comprennent un second le vier 23 pivotant autour d'un axe 24 dont l'une 23a des extrémités fait saillie à la partie inférieure du récipient 1 et prend appui sur la paroi supérieure 25 du socle 5 lorsque le récipient 1 mis en place sur ce dernier, comme indiqué sur la figure 1.

L'autre extrémité 23b du levier 23 prend appui sous le premier lever 13 sous l'action d'un ressort 26 poussant ce premier levier 13 en position de mise hors circuit de l'alimentation électrique de la résistance 3 dès que le récipient 1 est soulevé du socle 5.

On va maintenant expliquer le fonctionnement de la bouilloire que l'on vient de décrire.

Dans la position représentée sur la figure 1, le lever 13 est en position arrêt. Le lever inférieur 23 a son extrémité 23a en appui sur le socle 5 et son extrémité 23b dans le vide du fait de la compression du ressort 26 due à la présence du socle 5.

Par ailleurs, l'organe 22 est en position hors-circuit de l'alimentation électrique de la résistance.

Pour mettre en position "marche", il suffit d'appuyer sur l'extrémité en saillie du levier 13, comme indiqué sur la figure 2. Ce mouvement fait pivoter l'organe 22 vers la position de mise en circuit de l'alimentation électrique de la résistance 3.

A partir de ce moment, la résistance 3 alimentée en courant électrique chauffe l'eau du récipient. La vapeur formée passe par le conduit latéral 14 et vient lécher l'élément bimétallique 15 avant de s'échapper à l'extérieur.

Lorsque la température de l'élément 15 atteint la valeur de consigne prédéterminée (qui peut être nettement inférieure à celle de la vapeur en haut du récipient) , cet élément 15 déclenche l'organe 22 qui coupe l'alimentation électrique de la résistance 3. Le levier 13 reprend alors la position "arrêt" représentée sur la figure 1.

L'alimentation électrique de la résistance 3 étant coupée, l'utilisateur peut enlever le récipient 1 du socle 5 pour se servir de l'eau chaude, sans risque de formation d'arcs électriques entre les broches 7 et les lames de connexion 6.

Dans la position représentée sur la figure 1, l'élément bimétallique 15 n'est pas directement en contact avec l'intérieur du récipient 1. Le refroidissement de cet élément est donc rapide. Il est ainsi possible de le réarmer à nouveau très rapidement, ce qui permet à l'utilisateur de se servir, sans trop attendre, une nouvelle quantité d'eau à la température optimale.

Si par mégarde l'utilisateur enlève le récipient 1 du socle 5, avant que l'organe 22 ait coupé l'alimentation électrique de la résistance 3, c'est à dire avant déclenchement du limiteur de température 12, le simple fait de soulever le récipient 1 a pour effet de faire basculer le levier inférieur 23 sous l'effet du ressort 26, étant donné que son extrémité 23a n'est plus en contact avec la paroi 25 du socle. Ce basculement du levier 23 (voir figure 3) pousse le levier de commande 13 vers le haut, c'est-à-dire en position "arrêt". Ainsi même dans ce cas, la formation d'arcs entre les broches 7 et les lames 6 est évitée.

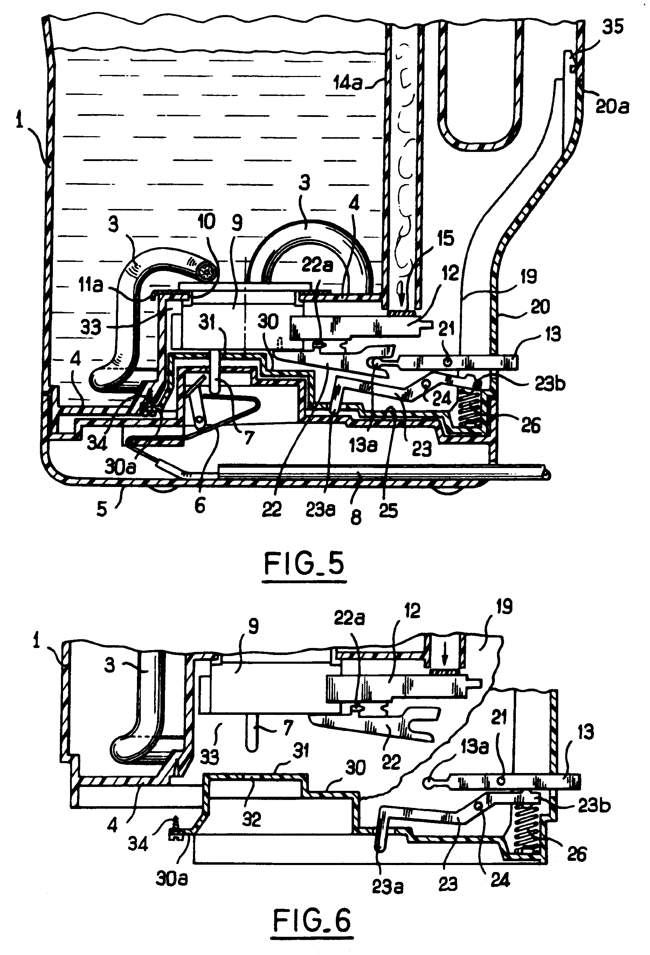

Dans les réalisations selon les figures 5 et 6, sous le fond 4 du récipient à eau est fixée de façon amovible une paroi dont la face supérieure 31 s'étend sous le bloc de connexion 9 auquel est fixée la résistance de chauffage 3. Cette paroi 30 comporte des ouvertures 32 pour le passage des broches de connexion 7 du bloc 9.

La face supérieure 31 de la paroi 30 est située au sommet d'une protubérance engagée dans un évidement 33 du fond 4 du récipient 1.

Par ailleurs, la paroi 30 fait partie d'une pièce sensiblement en forme de L, dont l'une 20 des ailes s'étend sur la paroi latérale de la bouilloire, son extrémité 20a étant fixée de façon amovible à ladite paroi latérale, sous la poignée de la bouilloire.

L'autre aile de la pièce en forme de L supporte les leviers 13 et 23 ainsi que le ressort 26.

On voit sur la figure 6, que l'ensemble de la pièce en forme de L est détachable du fond 4 de la bouilloire.

L'extrémité 30a de l'aile comprenant la protubérance est fixée au fond 4 du récipient par une vis 34, tandis que l'extrémité 20a de l'autre aile est fixée sous la poignée de la bouilloire au moyen d'un crochet 35.

Le fond 4 du récipient 1 comporte autour du bloc de connexion 9 une rondelle 11a qui remplace la tôle 11 de la réalisation précédemment décrite.

Les avantages techniques de la paroi 30, 31 sont les suivants :

Comme montré sur la figure 5, le bloc de connexion 9 est calé entre les deux parois 4 et 31. Ainsi, en cas de surchauffe (due simultanément a l'absence d'eau et au non fonctionnement du thermostat de coupure à sec), le bloc de connexion 9 au lieu de s'enfoncer du fait du ramollissement de la matière plastique du fond 4, reste en place en prenant appui sur la paroi 31. Cette disposition a permis de supprimer presqu'entièrement la tôle 11 et de réduire celle-ci à une simple rondelle 11a.

Bien entendu, l'invention n'est pas limitée aux exemples de réalisation que l'on vient de décrire et on peut apporter à ceux-ci de nombreuses modifications sans sortir du cadre de l'invention telle que défini par les revendications.

## Revendications

1. Bouilloire électrique comprenant un récipient à eau (1) fermé par un couvercle (2), ce récipient comportant une résistance chauffante électrique (3) fixée au fond (4) de ce récipient, ce fond (4) reposant de façon amovible sur un socle (5) comportant des moyens de connexion électrique (6) coopérant avec des moyens de connexion complémentaires (7) faisant partie d'un bloc de connexion fixé au fond (4) du récipient, le récipient (1) comprenant d'autre part un limiteur de température (12) sensible à la température de la vapeur et adapté pour couper l'alimentation électrique à une température prédéterminée de la vapeur et un interrupteur (13) étant prévu pour commander l'alimentation électrique de la résistance lorsque le récipient (1) est placé sur le socle (5), caractérisée en ce que le récipient (1) comporte un conduit (14) de passage de la vapeur s'étendant sensiblement sur toute la hauteur du récipient et faisant saillie à l'intérieur du récipient, en ce que le conduit (14) débouche à sa partie inférieure en regard de l'élément (15) sensible à la température du limiteur de température (12), en ce que la quasi-totalité de la surface extérieure (14a) du conduit (14) est exposée à l'intérieur du récipient (1), et en ce que le limiteur de température (12) fait partie du bloc de connexion (9), ce limiteur s'étendant horizontalement à faible distance du fond du récipient (1), l'interrupteur pour commander l'alimentation électrique de la résistance comprenant un lever de commande (13) s'étendant dans un espace (19) situé sous le fond (4) du récipient et faisant saillie à la partie inférieure de la paroi latérale (20) du récipient.

2. Bouilloire conforme à la revendication 1, caractérisée en ce que le levier de commande (13) est articulé sur un axe (21) situé à l'intérieur du récipient et son extrémité (13a) opposée à l'extérieur du récipient est articulée à un organe (22) pouvant pivoter entre une position où l'alimentation électrique de la résistance (3) est en circuit et une position dans laquelle celle-ci est hors circuit.

3. Bouilloire conforme à la revendication 2, caractérisée en ce que l'organe pivotant (22) est stable dans les deux positions.

4. Bouilloire conforme à l'une des revendications 2 ou 3, caractérisée en ce que l'organe pivotant (22) est associé au limiteur de température (12).

5. Bouilloire conforme à l'une des revendications 1 à 4, caractérisée en ce que le levier de commande (13) coopère avec des moyens (23) qui l'amènent automatiquement en position de mise hors circuit de l'alimentation électrique de la résistance (3), lorsque le récipient (1) est enlevé du socle (5).

6. Bouilloire conforme à la revendication 5, caractérisée en ce que lesdits moyens comprennent un second levier (23) pivotant dont l'une (23a) des extrémités fait saillie à la partie inférieure du récipient et prend appui sur le socle (5) lorsque le récipient est mis en place sur ce dernier, l'autre extrémité (23b) du levier (23) prenant appui sous le premier levier (13) sous l'action d'un ressort (26) poussant ce premier lever (13) en position de mise hors circuit de l'alimentation électrique lorsque le récipient (1) est soulevé du socle (5).

7. Bouilloire conforme à l'une quelconque des revendications 1 à 6, caractérisée en ce que sous le fond (4) du récipient à eau (1) est fixée de façon amovible une paroi (30) dont la face supérieure (31) s'étend sous le bloc de connexion (9) auquel est fixée la résistance de chauffage (3), cette paroi (30) comportant des ouvertures (32) pour le passage des broches de connexion (7) du bloc (9).

8. Bouilloire conforme à la revendication 7, caractérisée en ce que la face supérieure (31) de ladite paroi est située au sommet d'une protubérance engagée dans un évidement (33) du fond (4) du récipient.

9. Bouilloire conforme à l'une des revendications 7 ou 8, caractérisée en ce que ladite paroi (30) fait partie d'une pièce sensiblement en forme de L dont l'une (20) des ailes s'étend sur la paroi latérale de la bouilloire, son extrémité (20a) étant fixée de façon amovible à ladite paroi latérale.

10. Bouilloire conforme à la revendication 9, caractérisée en ce que l'autre aile de ladite pièce en forme de L supporte les leviers (13) et (23) ainsi que le ressort (26).

11. Bouilloire conforme à l'une des revendications 9 ou 10, caractérisée en ce que l'ensemble de ladite pièce en forme de L est détachable du fond (4) de la bouilloire.

12. Bouilloire conforme à la revendication 11, caractérisée en ce que l'extrémité (30a) de l'aile comprenant la protubérance est fixée au fond (4) du récipient par une vis (34), tandis que l'extrémité de l'autre aile est fixée à la paroi latérale de la bouilloire au moyen d'un crochet (35).

13. Bouilloire conforme à l'une des revendications 7 à 12, caractérisée en ce que le fond (4) du récipient (1) comporte autour du bloc de connexion (9) une rondelle (11a).

## Claims

1. An electric kettle comprising a water vessel (1) closed by a lid (2), the vessel comprising an electric heating resistor (3) secured to the bottom (4) of the vessel, the bottom (4) resting removably on a baseplate (5) comprising electric connection means (6) co-operating with complementary connection means (7) forming part of a connection unit fixed to the bottom (4) of the vessel, the vessel (1) also comprising a temperature limiter (12) sensitive to the temperature of the steam and adapted to disconnect the electricity supply when the steam reaches a predetermined temperature, a switch (13) being provided for switching on the resistor when the vessel (1) is placed on the baseplate (5), characterised in that the vessel (1) comprises a steam-conveying duct (14) extending substantially all the way up the vessel and projecting inside the vessel, in that the bottom of the duct (14) opens out opposite the temperature-sensitive component (15) of the temperature limiter (12), in that practically the entire outer surface (14a) of the duct (14) is exposed inside the vessel (1), and in that the temperature limiter (12) forms part of the connection unit (9), said limiter extending horizontally at a short distance from the bottom of the vessel (1), the switch for controlling the electricity supply to the resistor comprising a control lever (13) extending into a space (19) situated beneath the bottom (4) of the vessel and projecting from the bottom part of the side wall (20) of the vessel.

2. A kettle according to claim 1, characterised in that the control lever (13) is mounted on a pivot (21) inside the vessel and its end (13a) remote from the exterior of the vessel is articulated to a means (22) which can pivot between a position in which the electricity supply to the resistor (3) is connected and a position in which the supply is disconnected.

3. A kettle according to claim 2, characterised in that the pivoting means (22) is stable in its two positions.

4. A kettle according to claim 2 or 3, characterised in that the pivoting means (22) is associated with the temperature limiter (12).

5. A kettle according to any of claims 1 to 4, characterised in that the control lever (13) co-operates with means (23) which automatically bring it into the position for disconnecting the resistor (3) when the vessel (1) is taken off the baseplate (5).

6. A kettle according to claim 5, characterised in that said means comprise a second pivoting lever (23), one end (23a) of which projects from the bottom of the vessel and presses against the baseplate (5) when the vessel is positioned thereon, whereas the other end (23b) of the lever (23) is pressed under the first lever (13) by a spring (26) which pushes the first lever (13) into the position for disconnecting the electricity supply when the vessel (1) is lifted off the baseplate (5).

7. A kettle according to any of claims 1 to 6, characterised in that a wall (30) is removably secured under the bottom (4) of the water vessel (1), the top surface (31) of the wall extending under the connection unit (9) to which the heating resistor (3) is secured, the wall (30) being formed with openings (32) for the connecting pins (7) of the unit (9).

8. A kettle according to claim 7, characterised in that the upper surface (31) of the wall is situated at the top of a protuberance which fits into a recess (33) in the bottom (4) of the vessel.

9. A kettle according to claim 7 or 8, characterised in that the wall (30) forms part of a substantially L-shaped component, one arm (20) of which extends along the side wall of the kettle, the end (20a) of the arm being removably secured to the side wall.

10. A kettle according to claim 9, characterised in that the other arm of the L-shaped member bears the levers (13 and 23) and the spring (26).

11. A kettle according to claim 9 or 10, characterised in that the entire L-shaped member is detachable from the bottom (4) of the kettle.

12. A kettle according to claim 11, characterised in that the end (30a) of the arm comprising the protuberance is secured to the bottom (4) of the vessel by a screw (34), whereas the end of the other arm is secured to the side wall of the kettle by a hook (35).

13. A kettle according to any of claims 7 to 12, characterised in that the bottom (4) of the vessel (1) has a washer (11a) around the connecting unit (9).

## Patentansprüche

1. Elektrischer Wasserkocher, mit einem durch einen Deckel (2) verschlossenen Wasserbehälter (1), der einen an seinem Boden (4) befestigten elektrischen Heizwiderstand (3) umfaßt, wobei dieser Boden (4) abnehmbar auf einem Sockel (5) aufruht, der elektrische Verbindungsmittel (6) umfaßt, die mit komplementären Verbindungsmitteln (7) zusammenwirken, die einen Teil eines Verbindungsblocks bilden, der am Boden (4) des Behälters befestigt ist, wobei der Behälter (1) andererseits einen Temperaturbegrenzer (12) aufweist, der auf die Temperatur des Dampfes anspricht und so ausgebildet ist, daß er die elektrische Versorgung bei einer vorgegebenen Temperatur des Dampfes unterbricht, sowie einen Schalter (13), der zur Steuerung der elektrischen Versorgung des Widerstandes vorgesehen ist, wenn der Behälter (1) auf dem Sockel (5) angeordnet ist, dadurch gekennzeichnet, daß der Behälter (1) eine Dampfdurchlaßleitung (14) enthält, die sich im wesentlichen über die ganze Höhe des Behälters erstreckt und in das Innere des Behälters hineinragt, und daß diese Leitung (14) an ihrem unteren Teil gegenüber dem temperaturempfindlichen Element (15) des Temperaturbegrenzers (12) mündet, daß fast die gesamte Außenfläche (14a) der Leitung (14) dem Innenraum des Behälters (1) ausgesetzt ist und daß der Temperaturbegrenzer (12) einen Teil des Verbindungsblocks (9) bildet, wobei sich der Begrenzer horizontal in geringem Abstand vom Boden des Behälters (1) erstreckt und der Schalter zum Steuern der elektrischen Versorgung des Widerstandes einen Steuerhebel (13) aufweist, der sich in einem unterhalb des Bodens (4) des Behälters befindlichen Raum (19) erstreckt und aus der Seitenwand (20) des Behälters ragt.

2. Wasserkocher gemäß Anspruch 1, dadurch gekennzeichnet, daß der Steuerhebel (13) auf einer im Inneren des Behälters angeordneten Achse (21) gelenkig untergebracht ist und sein der Außenseite des Behälters entgegengesetztes Ende (13a) mit einem Element (22) gelenkig verbunden ist, das zwischen einer Position, in der die elektrische Versorgung des Widerstandes (3) eingeschaltet ist, und einer Position, in der dieselbe ausgeschaltet ist, schwenkbar ist.

3. Wasserkocher gemäß Anspruch 2, dadurch gekennzeichnet, daß das schwenkbare Element (22) in den beiden Positionen stabil ist.

4. Wasserkocher gemäß einem der Ansprüche 2 oder 3, dadurch gekennzeichnet, daß das schwenkbare Element (22) dem Temperaturbegrenzer (12) zugeordnet ist.

5. Wasserkocher gemäß einem der Ansprüche 1 bis 4, dadurch gekennzeichnet, daß der Steuerhebel (13) mit Mitteln (23) zusammenwirkt, die ihn automatisch in die Position der ausgeschalteten elektrischen Versorgung des Widerstandes (3) umlegen, wenn der Behälter (1) vom Sockel (5) abgehoben wird.

6. Wasserkocher gemäß Anspruch 5, dadurch gekennzeichnet, daß die Mittel einen zweiten schwenkbaren Hebel (23) umfassen, von dem eines (23a) seiner Enden aus dem unteren Teil des Behälters ragt und sich auf dem Sockel (5) abstützt, wenn der Behälter auf den letzteren aufgesetzt wird, während sich das andere Ende (23b) des Hebels (23) unter dem ersten Hebel (13) unter der Wirkung einer Feder (26) abstützt, die den ersten Hebel (13) in die Position ausgeschalteter elektrischer Versorgung drückt, wenn der Behälter (1) vom Sockel (5) hochgehoben wird.

7. Wasserkocher gemäß einem der Ansprüche 1 bis 6, dadurch gekennzeichnet, daß unter dem Boden (4) des Wasserbehälters (1) abnehmbar eine Wand (30) befestigt ist, deren Oberseite (31) sich unter den Verbindungsblock (9) erstreckt, an dem der Heizwiderstand (3) befestigt ist, wobei diese Wand (30) Öffnungen (32) für den Durchgang von Verbindungsstiften (7) des Blocks (9) enthält.

8. Wasserkocher gemäß Anspruch 7, dadurch gekennzeichnet, daß die Oberseite (31) der Wand am obersten Punkt eines in eine Vertiefung (33) des Bodens (4) des Behälters eingreifenden Vorsprungs angeordnet ist.

9. Wasserkocher gemäß einem der Ansprüche 7 oder 8, dadurch gekennzeichnet, daß die Wand (30) Teil eines im wesentlichen L-förmigen Stückes ist, von dem sich einer (20) der Schenkel zur Seitenwand des Wasserkochers erstreckt, wobei sein Ende (20a) lösbar an der Seitenwand befestigt ist.

10. Wasserkocher gemäß Anspruch 9, dadurch gekennzeichnet, daß der andere Schenkel des L-förmigen Stückes die Hebel (13) und (23) sowie die Feder (26) trägt.

11. Wasserkocher gemäß einem der Ansprüche 9 oder 10, dadurch gekennzeichnet, daß das gesamte L-förmige Stück vom Boden (4) des Wasserkochers abnehmbar ist.

12. Wasserkocher gemäß Anspruch 11, dadurch gekennzeichnet, daß das Ende (30a) des den Vorsprung umfassenden Schenkels am Boden (4) des Behälters mittels einer Schraube (34) befestigt ist, während das Ende des anderen Schenkels an der Seitenwand des Wasserkochers mittels eines Hakens (35) befestigt ist.

13. Wasserkocher gemäß einem der Ansprüche 7 bis 12, dadurch gekennzeichnet, daß der Boden (4) des Behälters (1) eine um den Verbindungsblock (9) angeordnete Scheibe (11a) enthält.
